# DEMANDE DE BREVET EUROPEEN

(11) **EP 0 669 455 A1**
(43) Date de publication de la demande: **30.08.1995**
(21) Numéro de dépôt: 95400328.1
(22) Date de dépôt: 16.02.1995
(51) Int. Cl.: F02B 27/02

(54) **Dispositif d'admission pour moteur à combustion interne**

(30) Priorité: 25.02.1994 FR 9402165
(71) Demandeur: REGIE NATIONALE DES USINES RENAULT S.A., F-92109 Boulogne Billancourt (FR)
(72) Inventeur: Mathieu, Hervé, F-60000 Beauvais (FR)
(74) Mandataire: Fernandez, Francis Lionel

(57) **Abrégé**

Dispositif d'admission pour moteur à combustion interne notamment de véhicule automobile, comprenant un collecteur d'admission (4) à acoustique variable du type comportant pour chacune des chambres de combustion du moteur, un premier conduit (5) et un second conduit (6) de longueurs et de sections adaptées et une vanne (9) actionnée par des moyens de manoeuvre appropriés en fonction du régime de rotation et/ou de la charge du moteur de façon à obturer sélectivement ledit premier conduit d'admission (5), lesdits conduits (5,6) débouchant conjointement par des orifices de sorties distincts dans un élément de conduit de raccordement commun (10) et ladite vanne (9) étant disposée au voisinage de l'élément de conduit de raccordement (10) pour obturer le premier conduit (5) directement au droit de son orifice de sortie, caractérisé en ce que ladite vanne est formée par un boisseau rotatif (9).

## Description

La présente invention se rapporte à un dispositif d'admission pour moteur à combustion interne équipant en particulier les véhicules automobiles et elle concerne plus spécialement un dispositif d'admission à acoustique variable du type comprenant pour chaque chambre deux trajets d'admission de longueur et de section différentes utilisés sélectivement suivant les conditions de fonctionnement du moteur.

Il est connu d'utiliser pour optimiser le remplissage en air comburant des moteurs à combustion interne des circuits d'admission à acoustique variable permettant d'adapter les trajets d'admission au régime de rotation du moteur. Cette adaptation consiste essentiellement à proposer un trajet court et de forte section pour favoriser l'écoulement de l'air à haut régime en réduisant les pertes de charges au minimum et au contraire un trajet long et de section réduite à bas régime pour favoriser l'écoulement de l'air grâce à des phénomènes de résonnance acoustique.

Dans les dispositifs d'admission à acoustique variable connus utilisant deux conduits distincts de longueur et de section adaptées, comme par exemple celui décrit dans le document EP-A-382.596, il est prévu classiquement au moins une vanne d'obturation pilotée, du type papillon, disposée dans le conduit le plus court pour opérer la sélection des trajets de l'air d'admission.

Les moyens sélecteurs de trajet connus présentent toutefois un certain nombre d'inconvénients, notamment en ce qu'ils forment des obstacles à l'écoulement de l'air lors des fonctionnements à haut régime et pleine charge et donc pénalisent le remplissage des chambres de combustion. De plus, le positionnement de la vanne d'obturation à l'intérieur du conduit le plus court génère un espace mort à l'intérieur de ce conduit en aval de la vanne lorsque cette dernière est fermée, espace mort qui s'avère préjudiciable à l'écoulement de l'air sortant du conduit long.

Le but de l'invention est donc de proposer un dispositif d'admission à acoustique variable qui remédie aux inconvénients précités, grâce à un système sélecteur de trajet qui ne génère aucune zone morte et aucune perte de charge.

Le dispositif d'admission pour moteur à combustion interne notamment de véhicule automobile, objet de l'invention comprend un collecteur d'admission à acoustique variable du type comportant pour chacune des chambres de combustion du moteur, un premier conduit adapté pour amener l'air à haut régime et un second conduit pour amener l'air à bas régime, ces conduits étant de longueurs et de sections adaptées et une unique vanne actionnée par des moyens de manoeuvre en fonction du régime de rotation et/ou de la charge du moteur de façon à obturer sélectivement le premier conduit d'admission.

Selon l'invention, le dispositif d'admission pour moteur à combustion interne est caractérisé en ce que d'une part les deux conduits débouchent conjointement par des orifices de sorties distincts dans un élément de conduit de raccordement commun et en ce que d'autre part la vanne d'obturation est disposée au voisinage de cet élément de conduit de raccordement pour obturer le premier conduit directement au droit de son orifice de sortie et supprimer ainsi dans ce conduit tout espace mort s'étendant en aval de la vanne lors de l'obturation de ce conduit.

Selon une autre caractéristique du dispositif d'admission pour moteur à combustion interne objet de l'invention, la vanne d'obturation est agencée de façon à ne pas générer d'obstacle à l'écoulement de l'air lors de l'ouverture de ladite conduite.

Selon une autre caractéristique du dispositif d'admission pour moteur à combustion interne objet de l'invention, la vanne d'obturation comporte un organe obturateur conformé pour favoriser l'écoulement de l'air sortant du second conduit dans l'élément de conduit de raccordement commun lorsque ledit organe obturateur est positionné pour obturer le premier conduit.

Selon une autre caractéristique du dispositif d'admission pour moteur à combustion interne objet de l'invention, la vanne est formée par un boisseau rotatif.

Selon une autre caractéristique du dispositif d'admission pour moteur à combustion interne objet de l'invention, l'axe de rotation du boisseau rotatif est positionné au droit de l'orifice de sortie du premier conduit.

Selon une autre caractéristique du dispositif d'admission pour moteur à combustion interne objet de l'invention, le secteur angulaire définissant la paroi obturatrice du boisseau rotatif est d'environ 180°.

On comprendra mieux les buts, aspects et avantages de la présente invention, d'après la description donnée ci-après d'un mode de réalisation de l'invention, ce mode de réalisation étant donné à titre d'exemple non limitatif, en se référant au dessin annexé, dans lequel :
- la figure 1 est une vue en coupe longitudinale partielle d'un dispositif d'admission selon l'invention ;
- la figure 2 est une vue similaire à la figure 1 précisant le fonctionnement du dispositif d'admission selon l'invention.

Seules les parties du dispositif d'admission nécessaires à la compréhension de l'invention ont été figurées, ainsi seuls les conduits alimentant une chambre de combustion ont été figurés. Par ailleurs, pour faciliter la lecture du dessin, les mêmes éléments portent les mêmes références d'une figure à l'autre.

Conformément aux figures, le moteur à combustion 1 comprend une culasse 3 définissant les parois de tête des chambres de combustion non figurées. La culasse est traversée par des conduits d'admission appelés encore pipes d'admission 2 débouchant dans les chambres de combustion par des sièges obturables par des soupapes à tige. Dans l'exemple de réalisation décrit l'alimentation en carburant du moteur a lieu par injection multipoint, chaque chambre de combustion dispose de son injecteur 8.

Les extrémités 12 opposées aux chambres de combustion des pipes d'admission 2 sont connectées à un collecteur d'admission indiqué dans son ensemble par 4. Le collecteur 4 comprend un répartiteur 7 ou plénum qui s'étend parallèlement au bloc moteur et des conduits rejoignant les pipes d'admission 2.

A chaque pipe d'admission 2 est associé deux conduits distincts dont les orifices d'entrée débouchent dans le répartiteur 7. Le premier conduit 5, plus particulièrement destiné à l'alimentation en air à haut régime, est relativement court et de forte section, tandis que le second conduit 6, plus particulièrement destiné à l'alimentation en air à bas régime, est relativement long et de section restreinte. Ces longueurs et ces sections sont adaptées aux caractéristiques du moteur par des expérimentations préalables aux bancs d'essai.

Les deux conduits 5 et 6 débouchent conjointement par des orifices de sorties distincts dans un élément de conduit de raccordement 10 qui est connecté à l'orifice 12 correspondant de la pipe d'admission 2.

Au voisinage de l'élément de conduit de raccordement 10, est disposé un boisseau rotatif 9 positionné dans un logement correspondant du collecteur d'admission 4. Ce boisseau rotatif 9 est destiné à venir obturer sélectivement le premier conduit 5 en fonction du régime de rotation et/ou de la charge du moteur grâce à des moyens de manoeuvre pilotés non figurés.

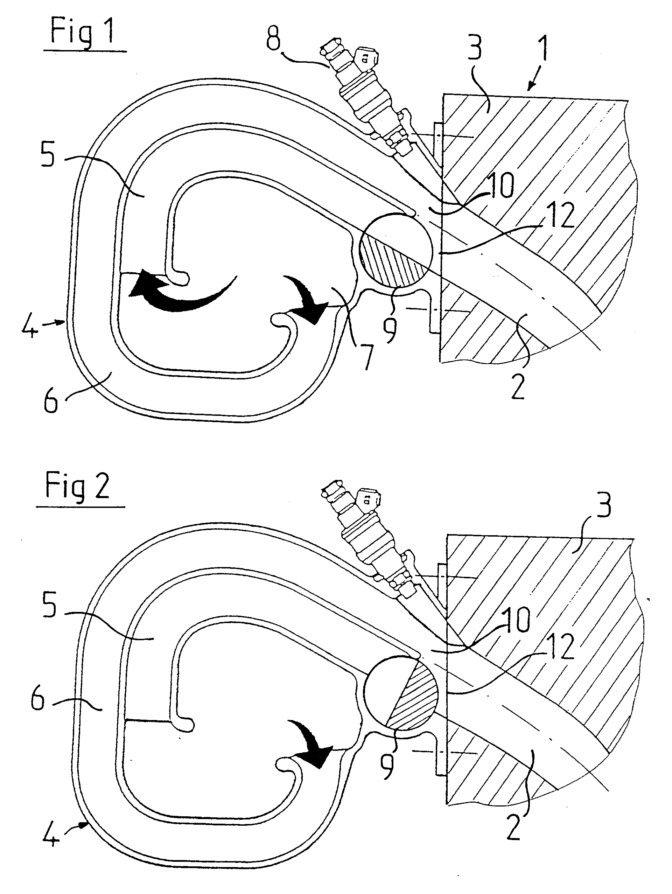

Le boisseau 9 est conformé de façon que, lorsque celui-ci est en position "ouvert" (confère figure 1) pour libérer ainsi la circulation de l'air à travers le conduit 5, l'ouverture de passage du boisseau correspond parfaitement à la surface intérieure des conduits 5 et 10 de façon à ne générer aucune perte de charge à l'encontre de l'écoulement de l'air à travers notamment le conduit 5.

Le positionnement du boisseau 9 sensiblement au droit de l'orifice de sortie du conduit 5 dans l'élément de conduit de raccordement 10 permet de supprimer tout espace mort lorsque le boisseau est en position "fermé" (confère figure 2) pour interdire la circulation de l'air à travers le conduit 5. La forme du secteur d'obturation du boisseau 9 permet même de faciliter l'écoulement de l'air sortant du second conduit d'admission 6.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

**[1]** Dispositif d'admission pour moteur à combustion interne notamment de véhicule automobile, comprenant un collecteur d'admission (4) à acoustique variable du type comportant pour chacune des chambres de combustion du moteur, un premier conduit (5) et un second conduit (6) de longueurs et de sections adaptées et une vanne (9) actionnée par des moyens de manoeuvre appropriés en fonction du régime de rotation et/ou de la charge du moteur de façon à obturer sélectivement ledit premier conduit d'admission (5), lesdits conduits (5,6) débouchant conjointement par des orifices de sorties distincts dans un élément de conduit de raccordement commun (10) et ladite vanne (9) étant disposée au voisinage de l'élément de conduit de raccordement (10) pour obturer le premier conduit (5) directement au droit de son orifice de sortie, caractérisé en ce que ladite vanne est formée par un boisseau rotatif (9).

**[2]** Dispositif d'admission pour moteur à combustion interne selon la revendication 1, caractérisé en ce que ledit boisseau rotatif (9) est agencé de façon à ne pas générer d'obstacle à l'écoulement de l'air lors de l'ouverture dudit conduit (5).

**[3]** Dispositif d'admission pour moteur à combustion interne selon l'une quelconque des revendications 1 à 2, caractérisé en ce que ledit boisseau rotatif (9) est conformé pour favoriser l'écoulement de l'air sortant dudit second conduit (6) dans l'élément de conduit commun (10) lorsque ledit organe obturateur est positionné pour obturer ledit premier conduit (5).

**[4]** Dispositif d'admission pour moteur à combustion interne selon l'une quelconque des revendication 1 à 3, caractérisé en ce que ledit boisseau rotatif (9) est positionné au droit de l'orifice de sortie dudit premier conduit (5).
